# EUROPÄISCHE PATENTSCHRIFT

(11) **EP 0 829 003 B1**
(45) Veröffentlichungstag und Bekanntmachung des Hinweises auf die Patenterteilung: **26.09.2001**
(21) Anmeldenummer: 96946029.4
(22) Anmeldetag: 02.12.1996
(51) Int. Cl.: G01L 19/00, G01L 9/00, G01L 19/14

(54) **DRUCKSENSOR UND VERFAHREN ZUR HERSTELLUNG EINES DRUCKSENSORS**
PRESSURE SENSOR AND METHOD OF PRODUCING THE SAME
DETECTEUR DE PRESSION ET PROCEDE PERMETTANT DE LE PRODUIRE

(30) Priorität: 01.04.1996 DE 19612964
(43) Veröffentlichungstag der Anmeldung: 18.03.1998
(73) Patentinhaber: ROBERT BOSCH GMBH, 70442 Stuttgart (DE)
(72) Erfinder: ROETHLINGSHOEFER, Walter, D-72766 Reutlingen (DE); WEIBLEN, Kurt, D-72555 Metzingen (DE); GOEBEL, Ulrich, D-72760 Reutlingen (DE)
(86) Internationale Anmeldenummer: DE9602301
(87) Internationale Veröffentlichungsnummer: WO9737204

(56) Entgegenhaltungen:
- EP-A- 0 330 011
- EP-A- 0 553 725
- DE-A- 4 317 312
- US-A- 3 808 480
- US-A- 5 454 270

## Beschreibung

### Stand der Technik

Die Erfindung betrifft einen Drucksensor umfassend ein Gehäuse, eine an einer Montagefläche des Gehäuses angeordnete Trägerplatte, ein in dem Gehäuse angeordnetes Sensorelement und wenigstens ein elektrisch leitend mit wenigstens einer Kontaktfläche der Trägerplatte verbundenes Anschlußelement.

Ein derartiger Drucksensor geht beispielsweise aus der DE 43 17 312 A1 hervor. Bei diesem Drucksensor sind sowohl die elektrischen Anschlußelemente, die Trägerplatte mit auf ihr befindlichen elektrischen/elektronischen Bauteilen sowie das Sensorelement jeweils separat in dem Gehäuse angeordnet. Drucksensor, Trägerplatte und elektrische Anschlußelemente sind dabei jeweils über Bonddrähte elektrisch leitend miteinander verbunden.

Nachteilig bei diesem Drucksensor ist zum einen die verhältnismäßig aufwendige Herstellung, da jeweils die elektrischen Anschlußelemente, die Trägerplatte sowie das Sensorelement separat in dem Gehäuse angeordnet werden müssen. Zum anderen erweist sich die Kontaktierung über Bonddrähte gerade für einen Drucksensor als besonders nachteilig, da derartige Bonddrähte sehr empfindlich sind, so daß - insbesondere bei Beaufschlagung mit einem Medium unter Druck - die Gefahr einer Beschädigung und damit einer Zerstörung des Drucksensors besteht.

Aus der EP 0 553 725 A ist ein Drucksensor bekannt, welcher ein Gehäuse, eine an einer Montagefläche des Gehäuses angeordnete Trägerplatte, ein in dem Gehäuse angeordnetes Sensorelement und wenigstens ein elektrisch leitend mit wenigstens einer Kontaktfläche der Trägerplatte verbundenes Anschlußelement sowie einen zwischen der Trägerplatte und der Montagefläche des Gehäuses angeordneten Kleber aufweist. Bei der Herstellung werden die Anschlußelemente außerhalb des Gehäuses zunächst an den Kontaktflächen der Trägerplatte befestigt. Danach wird die Trägerplatte in das Gehäuse eingesetzt, wobei die Anschlußelemente in Durchführungsausnehmungen des Gehäuses eingeführt werden, um eine Isolierung der Anschlußelemente von dem Gehäuse zu erreichen. Dabei wird vor dem Einsetzen des Trägersubstrats ein Kleber auf die Montagefläche aufgebracht und anschließend die Sensoreinheit mit der Trägerplatte auf den Kleber aufgedrückt. Die Herstellung ist recht aufwendig. Darüber hinaus können durch die Ausnehmungen im Gehäuse Schadstoffe eindringen, welche den Kleber angreifen.

Aufgabe der Erfindung ist es daher, einen Drucksensor der gattungsgemäßen Art dahingehend weiterzubilden, daß er zum einen auf einfache Weise herstellbar ist, zum anderen eine sehr hohe Störsicherheit und infolge davon eine sehr hohe Zuverlässigkeit auch über einen langen Zeitraum hinweg aufweist.

### Vorteile der Erfindung

Die Aufgabe wird durch einen Drucksensor gemäß Anspruch 1 gelöst.

Die bündige Anordnung des wenigstens einen Anschlußelements mit der Montagefläche und die direkte Kontaktierung mit der wenigstens einen Kontaktfläche der Trägerplatte hat den besonders großen Vorteil, daß zur Verbindung der Anschlußelemente mit der Trägerplatte keinerlei empfindliche Bonddrähte vorgesehen sein müssen, wodurch sich nicht nur die Herstellung wesentlich vereinfacht, sondern darüber hinaus auch die Störsicherheit und infolge davon die Funktionsfähigkeit über einen langen Zeitraum hinweg erhöht.

Die Anordnung einer Kapillarkleberschicht zwischen der Trägerplatte und der Montagefläche hat den großen Vorteil, daß hierdurch gewissermaßen eine Verbindung von Trägerplatte und Montagefläche und damit Gehäuse "aus einem Guß" ermöglicht wird. Diese Kapillarkleberschicht erhöht insbesondere die Stabilität der Verbindung zwischen der Trägerplatte und der Montagefläche, d.h. dem Gehäuse, und bildet auf diese Weise auch einen Schutz der Verbindungen zwischen den Kontaktflächen und den Anschlußelementen. Die Verwendung eines Kapillarklebers für diese Klebeschicht hat den großen Vorteil, daß dieser Kapillarkleber in die feinsten Poren zwischen der Montagefläche und der Trägerplatte fließt und so eine besonders feste, gewissermaßen monolithische Verbindung herstellt.

Hinsichtlich der Verbindung der Anschlußelemente und der Kontaktfläche sind die unterschiedlichsten Ausführungsarten denkbar. Beispielsweise kann vorgesehen sein, daß die Verbindung zwischen den Anschlußelementen und den Kontaktflächen eine Lötverbindung ist.

Darüber hinaus kann in vorteilhafter Weise auch eine Klebeverbindung vorgesehen sein, wobei in diesem Falle ein Leitkleber zur Herstellung der Verbindung verwendet wird.

In beiden Fällen können folglich die zumeist gedruckten Kontaktflächen mittels der sehr vorteilhaften SMD-Technologie mit den Anschlußelementen verbunden werden.

Besonders vorteilhaft ist es, daß der Kapillarkleber die elektrisch leitende Verbindung zwischen den Anschlußelementen und den Kontaktflächen umschließt und gegenüber der Umgebung abdichtet. Hierdurch wird nicht nur - wie oben bereits erwähnt - eine Erhöhung der Stabilität und eine Verminderung der auf die Verbindung zwischen den Kontaktflächen und den Anschlußelementen wirkenden (Scher)Kräfte erzielt, sondern gleichzeitig auch ein Schutz der Verbindungen zwischen den Anschlußelementen und den Kontaktflächen gegenüber Umgebungseinflüssen wie z.B. Korrosion, Oxidation u.dgl.

Rein prinzipiell könnte das Gehäuse aus einem beliebigen Material bestehen. Vorzugsweise ist das Gehäuse jedoch ein Kunststoffgehäuse, dessen thermischer Ausdehnungskoeffizient wenigstens in einer Richtung der Montagefläche auf denjenigen der Trägerplatte angepaßt ist. Ein Kunststoffgehäuse ist nicht nur einfach und kostengünstig herzustellen, sondern bei einem solchen Kunststoffgehäuse kann durch die Ausnutzung der Anisotropie des Ausdehnungskoeffizienten ein speziell auf den Träger, und insbesondere auf dessen Ausdehnungskoeffizienten, angepaßtes Gehäuse geschaffen werden.

Vorzugsweise ist die Trägerplatte eine Hybrid-Keramikplatte, auf der das Sensorelement, beispielsweise ebenfalls mittels SMD-Technologie, angeordnet ist. Auf diese Weise erniedrigt sich insgesamt der Bauteileaufwand für die Anordnung des Sensors in dem Gehäuse.

Die erfindungsgemäße Aufgabe wird ferner auch noch durch ein Verfahren zur Herstellung eines Drucksensors gemäß Anspruch 8 gelöst.

### Zeichnung

Weitere Vorteile und Einzelheiten der Erfindung sind Gegenstand der nachfolgenden Beschreibung sowie der zeichnerischen Darstellung einiger Ausführungsbeispiele.

In der Zeichnung zeigen:
- Fig. 1: eine teilweise geschnittene Vorder- und Seitenansicht eines erfindungsgemäßen Drucksensors;
- Fig. 2: eine teilweise geschnittene Vorder- und Seitenansicht einer anderen Ausführungsform eines erfindungsgemäßen Drucksensors und
- Fig. 3: eine teilweise geschnittene Vorder- und Seitenansicht einer weiteren Ausführungsform eines erfindungsgemäßen Drucksensors.

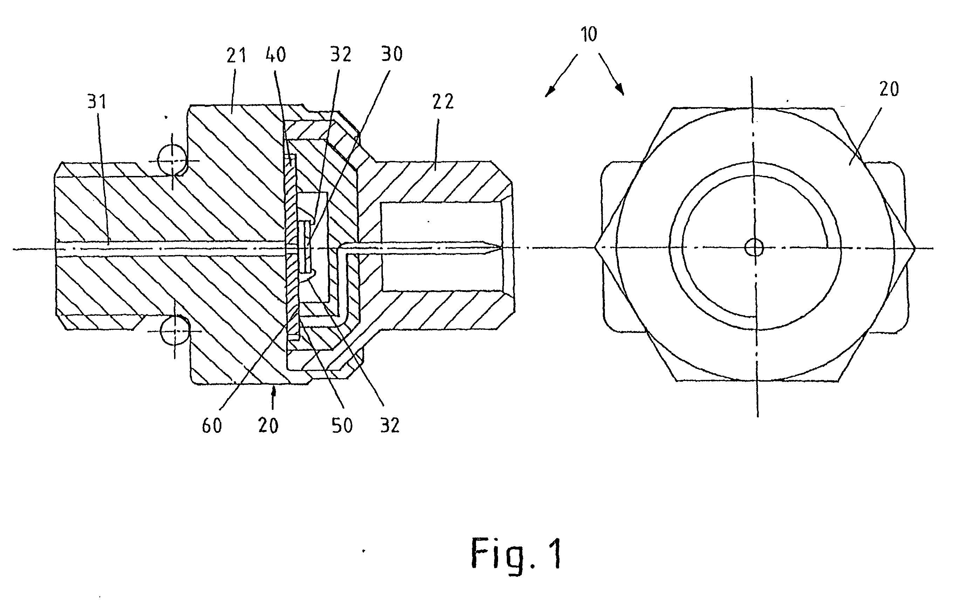

Ein Drucksensor, dargestellt in Fig. 1, Fig. 2 und Fig. 3, als Ganzes mit 10 bezeichnet, umfaßt ein Gehäuse 20, welches beispielsweise zwei Gehäusehälften 21, 22 umfaßt.

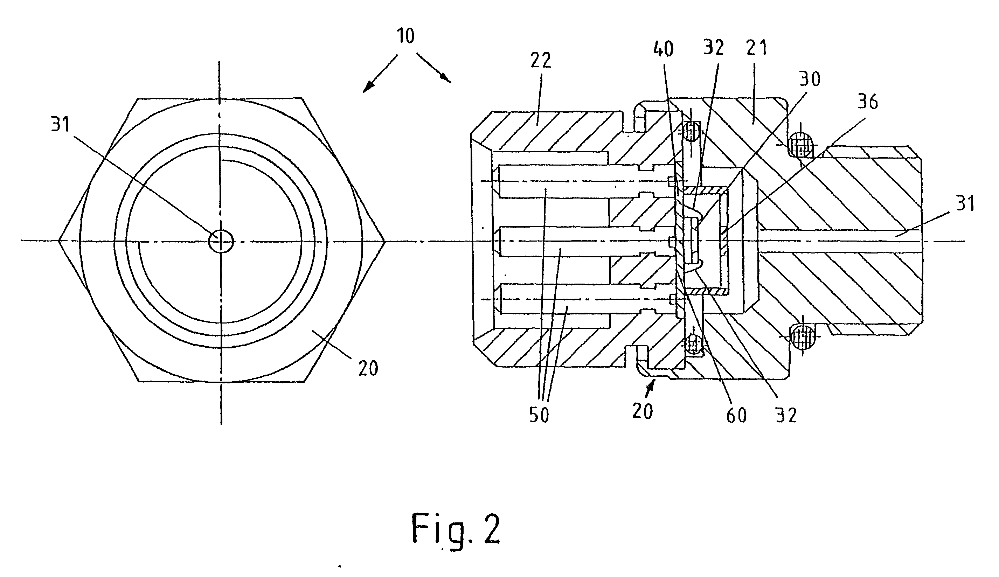

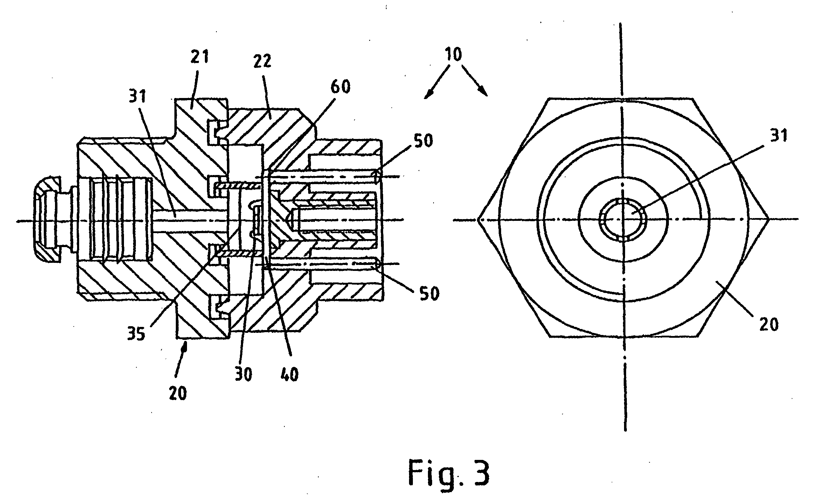

Das Gehäuse 20 hat eine im wesentlichen zylindrische Form und besteht vorzugsweise aus Kunststoff. In dem Gehäuse 20 ist ein Sensorelement 30 angeordnet. Das Sensorelement 30 ist über eine Rohrverbindung 31 mit der Umgebung verbunden. Über die Rohrverbindung 31 wirkt ein mit einem Druck beaufschlagtes Medium auf das Sensorelement 30, welches beispielsweise ein mit einer Membran versehener Silizium-Chip ist. Das Sensorelement 30 ist auf einer Trägerplatte 40 angeordnet und beispielsweise über Bonddrähte 32 mit (nicht dargestellten) Kontaktflächen auf der Trägerplatte 40 verbunden. Das Sensorelement 30 ist durch eine Membran 35 (vergl. Fig. 3) oder eine perforierte Schutzkappe 36 (vergl. Fig. 2) gegenüber dem mit Druck beaufschlagten Medium, insbesondere gegenüber gegebenenfalls in diesem befindlichen Staub, Schmutz u.dgl., geschützt.

Auf der Trägerplatte 40, die als Hybrid-Keramikplatte ausgebildet ist, können weitere (nicht dargestellte) elektrische/elektronische Bauelemente in einer elektrischen Schaltungsanordnung angeordnet sein.

Mit der Trägerplatte 40 elektrisch leitend verbunden sind Anschlußelemente 50, beispielsweise in Form von Steckkontakten oder Lötfahnen. Wie insbesondere aus Fig. 2 und 3 hervorgeht, sind dabei die Anschlußelemente 50 so ausgebildet, daß sie mit einer in dem Gehäuse 20 ausgebildeten Montagefläche 60 bündig verlaufen, so daß die auf der Trägerplatte angeordneten Kontaktflächen direkt mit den Anschlußelementen 50 mittels einer an sich bekannten SMD-Verbindungstechnik verbunden werden können.

Beispielsweise können die Kontaktflächen und die Anschlußelemente 50 miteinander verlötet werden. Eine andere Art der Verbindung besteht in einer Klebeverbindung unter Verwendung eines Leitklebers zur Herstellung und Ausbildung dieser Klebeverbindung.

Zur Erhöhung der Stabilität des auf diese Weise hergestellten Verbunds zwischen Anschlußelementen 50 und Trägerplatte wird zwischen die Trägerplatte 40 und die Fläche 60 ein Kapillarkleber eingebracht, der zum einen die Trägerplatte 40 fest mit der Montagefläche 60 verbindet, zum anderen die elektrisch leitenden Verbindungen zwischen den Anschlußelementen 50 und den Kontaktflächen umgibt und diese somit gegenüber Umgebungseinflüssen, insbesondere Korrosion, Oxidation u.dgl., schützt.

Der oben beschriebene Drucksensor wird nun dadurch hergestellt, daß zunächst die Kontaktflächen der Trägerplatte 40 mit den Anschlußelementen 50 verbunden werden. Beispielsweise wird zur Ausbildung einer Klebeverbindung auf die Kontaktflächen der Trägerplatte 40 ein Leitkleber aufgebracht. Sodann wird die Trägerplatte 40 auf der Montagefläche 60 und den Anschlußelementen 50 mittels dieses Leitklebers fixiert und schließlich wird in den sich dabei ergebenden Zwischenraum zwischen der Trägerplatte 40 und der Montagefläche 60 des Gehäuses ein Kapillarkleber zur Ausbildung einer abdichtenden Klebeverbindung eingebracht. Dieser Kapillarkleber fließt in die kleinsten Poren zwischen Trägerplatte 40 und Montagefläche 60 des Gehäuses 20 und stellt dabei nicht nur eine sehr feste, nahezu monolithische, Verbindung zwischen Trägerplatte 40 und Gehäuse 20 her, sondern erhöht auch die Festigkeit der elektrisch leitenden Verbindung zwischen den Anschlußelementen 50 und den Kontaktflächen der Trägerplatte 40 und schützt diese Anschlußelemente 50 gegenüber Umgebungseinflüssen.

Um insbesondere eine Unterbrechung der leitenden Verbindung zwischen den Anschlußelementen 50 und den Kontaktflächen der Trägerplatte 40 aufgrund unterschiedlicher thermischer Ausdehnungskoeffizienten des Gehäuses 20 und/oder der Trägerplatte 40 und/oder der metallischen Anschlußelemente 50 zu vermeiden, wird das Gehäuse 20 vorzugsweise aus einem Kunststoff hergestellt, dessen thermischer Ausdehnungskoeffizient in wenigstens einer Richtung der Montagefläche 60 im wesentlichen dem thermischen Ausdehnungskoeffizienten der als Hybrid-Keramikplatte ausgebildeten Trägerplatte 40 entspricht, so daß sich die Trägerplatte 40 und das Gehäuse 20 in dieser Ebene temperaturabhängig gleich ausdehnen.

## Patentansprüche

1. Drucksensor, umfassend ein Gehäuse (20), eine an einer Montagefläche (60) des Gehäuses angeordnete Trägerplatte (40), ein in dem Gehäuse (20) angeordnetes Sensorelement (30) und wenigstens ein elektrisch leitend mit wenigstens einer Kontaktfläche der Trägerplatte (40) verbundenes Anschlußelement (50) sowie einen zwischen der Trägerplatte und der Montagefläche angeordneten Kleber, **dadurch gekennzeichnet, daß** das wenigstens eine Anschlußelement (50) mit einem Abschnitt formschlüssig in dem Gehäuse angeordnet ist und das Ende dieses Abschnitts bündig mit der Montagefläche (60) verläuft und direkt mit der wenigstens einen Kontaktfläche verbunden ist und daß zwischen der Trägerplatte (40) und der Montagefläche (60) eine Kapillarkleberschicht angeordnet ist.

2. Drucksensor nach Anspruch 1, **dadurch gekennzeichnet, daß** der Kapillarkleber die elektrisch leitende Verbindung zwischen dem wenigstens einen Anschlußelement (50) und der wenigstens einen Kontaktfläche umschließt und gegenüber der Umgebung abdichtet.

3. Drucksensor nach Anspruch 1 oder 2, **dadurch gekennzeichnet, daß** die elektrisch leitende Verbindung zwischen dem wenigstens einen Anschlußelement (50) und der wenigstens einen Kontaktfläche eine Lötverbindung ist.

4. Drucksensor nach Anspruch 1 oder 2, **dadurch gekennzeichnet, daß** die elektrisch leitende Verbindung zwischen dem wenigstens einen Anschlußelement (50) und der wenigstens einen Kontaktfläche eine Klebeverbindung ist.

5. Drucksensor nach einem der voranstehenden Ansprüche, **dadurch gekennzeichnet, daß** das Gehäuse (20) ein Kunststoffgehäuse ist, dessen thermischer Ausdehnungskoeffizient wenigstens in einer Richtung der Montagefläche (60) auf denjenigen der Trägerplatte (40) angepaßt ist.

6. Drucksensor nach einem der voranstehenden Ansprüche, **dadurch gekennzeichnet, daß** das Sensorelement (30) auf der Trägerplatte (40) angeordnet ist.

7. Drucksensor nach einem der voranstehenden Ansprüche, **dadurch gekennzeichnet, daß** die Trägerplatte (40) eine Hybrid-Keramikplatte ist.

8. Verfahren zur Herstellung eines Drucksensors umfassend ein Gehäuse (20), eine an einer Montagefläche (60) des Gehäuses (20) angeordnete Trägerplatte (40), ein in dem Gehäuse angeordnetes Sensorelement (30) und wenigstens ein elektrisch leitend mit wenigstens einer Kontaktfläche der Trägerplatte (40) verbundenes Anschlußelement (50), wobei zwischen der Trägerplatte und der Montagefläche ein Kleber angeordnet wird, **dadurch gekennzeichnet, daß** das wenigstens eine Anschlußelement (50) mit einem Abschnitt formschlüssig in dem Gehäuse angeordnet ist und ein Ende dieses Abschnitts bündig mit der Montagefläche (60) verläuft und daß zunächst die wengistens eine Kontaktfläche mit dem bündig mit der Montagefläche (60) angeordneten Anschlußelement (50) direkt elektrisch leitend verbunden wird und daß daraufhin zwischen die Trägerplatte (40) und die Montagefläche (60) ein Kapillarkleber zur Ausbildung einer abdichtenden Klebeverbindung eingebracht wird.

## Claims

1. Pressure sensor, comprising a housing (20), a carrier board (40) arranged on a mounting surface (60) of the housing, a sensor element (30) arranged in the housing (20), and at least one connection element (50) which is electrically conductively connected to at least one contact surface of the carrier board (40) and an adhesive arranged between the carrier board and the mounting surface, **characterized in that** the at least one connection element (50) is arranged with one section in a form-fitting manner in the housing, and the end of this section runs flush with the mounting surface (60) and is connected directly to the at least one contact surface, and in that a capillary adhesive layer is arranged between the carrier board (40) and the mounting surface (60).

2. Pressure sensor according to Claim 1, **characterized in that** the capillary adhesive encloses the electrically conductive connection between the at least one connection element (50) and the at least one contact surface and seals it off from the environment.

3. Pressure sensor according to Claim 1 or 2, **characterized in that** the electrically conductive connection between the at least one connection element (50) and the at least one contact surface is a soldered joint.

4. Pressure sensor according to Claim 1 or 2, **characterized in that** the electrically conductive connection between the at least one connection element (50) and the at least one contact surface is an adhesive bond.

5. Pressure sensor according to one of the preceding claims, **characterized in that** the housing (20) is a plastic housing, the thermal expansion coefficient of which is matched to that of the carrier board (40) at least in one direction of the mounting surface (60).

6. Pressure sensor according to one of the preceding claims, **characterized in that** the sensor element (30) is arranged on the carrier board (40).

7. Pressure sensor according to one of the preceding claims, **characterized in that** the carrier board (40) is a hybrid ceramic board.

8. Method for producing a pressure sensor comprising a housing (20), a carrier board (40) arranged on a mounting surface (60) of the housing (20), a sensor element (30) arranged in the housing, and at least one connection element (50) which is electrically conductively connected to at least one contact surface of the carrier board (40), an adhesive being arranged between the carrier board and the mounting surface, **characterized in that** the at least one connection element (50) is arranged with one section in a form-fitting manner in the housing, and one end of this section runs flush with the mounting surface (60), and in that first of all the at least one contact surface is electrically conductively connected directly to the connection element (50) which is arranged flush with the mounting surface (60), and in that a capillary adhesive is subsequently introduced between the carrier board (40) and the mounting surface (60) in order to form a sealing adhesive bond.

## Revendications

1. Capteur de pression comprenant un boîtier (20), une plaque de support (40) prévue sur une surface de montage (60) du boîtier, un élément de détection (30) installé dans le boîtier (20) et au moins un élément de branchement (50) relié électriquement à au moins une surface de contact de la plaque de support (40), ainsi qu'un adhésif entre la plaque de support et la surface de montage,
**caractérisé en ce qu'**
au moins un segment de l'élément de branchement (50) est installé par une liaison de forme dans le boîtier, une extrémité de ce segment rejoint la surface de montage (60) et est reliée directement à au moins une surface de contact, et une couche d'adhésif capillaire est prévue entre la plaque de support (40) et la surface de montage (60).

2. Capteur de pression selon la revendication 1,
**caractérisé en ce que**
l'adhésif capillaire entoure la liaison électrique entre au moins un élément de branchement (50) et au moins une surface de contact et en assure l'étanchéité vis-à-vis de l'extérieur.

3. Capteur de pression selon l'une quelconque des revendications 1 ou 2,
**caractérisé en ce que**
la liaison électrique entre au moins un élément de branchement (50) et au moins une surface de contact est constituée par une brasure.

4. Capteur de pression selon l'une quelconque des revendications 1 ou 2,
**caractérisé en ce que**
la liaison électrique entre au moins un élément de branchement (50) et au moins une surface de contact est une liaison par adhésif.

5. Capteur de pression selon l'une quelconque des revendications précédentes,
**caractérisé en ce que**
le boîtier (20) est un boîtier en matière plastique dont le coefficient de dilatation thermique est adapté à celui de la plaque de support (40) au moins dans une direction de la surface de montage (60).

6. Capteur de pression selon l'une quelconque des revendications précédentes,
**caractérisé en ce que**
l'élément de détection (30) est prévu sur la plaque de support (40).

7. Capteur de pression selon l'une quelconque des revendications précédentes,
**caractérisé en ce que**
la plaque de support (40) est une plaque céramique hybride,

8. Procédé de fabrication d'un capteur de pression comprenant un boîtier (20), une plaque de support (40) prévue sur une surface de montage (60) du boîtier, un élément de détection (30) installé dans le boîtier (20) et au moins un élément de branchement (50) relié électriquement à au moins une surface de contact de la plaque de support (40), ainsi qu'un adhésif entre la plaque de support et la surface de montage,
**caractérisé en ce qu'**
au moins un segment d'un élément de branchement (50) est installé dans le boîtier avec une liaison par la forme et une extrémité de ce segment rejoint la surface de montage (60), et tout d'abord on relie en conduction électrique directe au moins une surface de contact avec l'élément de branchement (50) avec la surface de montage (60), et ensuite on réalise une liaison collée, étanche, entre la plaque de support (40) et la surface de montage (60) par un adhésif capillaire.
